# EUROPEAN PATENT SPECIFICATION

(11) **EP 0 832 562 B1**
(45) Date of publication and mention of the grant of the patent: **14.08.2002**
(21) Application number: 97307535.1
(22) Date of filing: 25.09.1997
(51) Int. Cl.: A21C 9/06

(54) **Apparatus for cutting and shaping a spherical body**
Vorrichtung zum Schneiden und Formen eines kugelförmigen Körpers
Appareil de découpage et de façonnage d'un corps sphérique

(30) Priority: 25.09.1996 JP 27544896
(43) Date of publication of application: 01.04.1998
(73) Proprietor: RHEON AUTOMATIC MACHINERY CO. LTD., Utsunomiya-shi Tochigi-ken (JP)
(72) Inventor: Tashiro, Yasunori, Utsunomiya-shi, Tochigi-ken (JP)
(74) Representative: Jackson, Robert Patrick

(56) References cited:
- EP-A- 0 360 446
- EP-A- 0 478 135
- EP-A- 0 676 149
- US-A- 4 636 158

## Description

This invention relates to an apparatus for shaping food products, in particular to an apparatus for cutting and shaping spherical food products, such as a bean-jam bun or bean-jam rice dumpling, from two-layered bar-shaped food material continuously extruded from an extruder.

One type of conventional apparatus for cutting and shaping a bean-jam bun is disclosed, e.g., in Japanese Utility Model Publication No. 5-25432. In it, at least three hexahedral pieces made of plastic material that each have two adjacent sliding side surfaces are combined into an assembly by making these sliding surfaces abut each other, the assembly is held in a polygonal housing so as to form a central opening surrounded by parts of the sliding surfaces, and the hexahedral pieces are made to slide on each other so as to open and close the central opening so that a dough bar passing therethrough is cut and shaped.

In another type of conventional apparatus, e.g., the one shown in Japanese Patent Publication No. 5-9051, polyhedral members of an identical shape are pivoted on fulcrums equidistantly disposed on an imaginary circle, and the polyhedral members are arranged such that each polyhedral member synchronously rotates, while its tip tracks the side surface of an adjacent member, so as to open and close a central opening surrounded by the side surfaces to cut and shape food material passing therethrough.

The conventional apparatus for cutting and shaping a spherical body shown in Japanese Utility Model Publication No. 5-25432 has problems in that the plastic hexahedral pieces encased in the housing tend to expand and be clogged or burnt by heat generated during the operation, which thus must be discontinued.

The conventional apparatus shown in Japanese Patent Publication No. 5-9051 also has problems in that between the side surfaces of adjacent members, other than the surfaces of the tips of the polyhedral members, gaps are formed during the time the tips track the side surfaces of adjacent side surfaces of the members, until the side surfaces of the members abut each other. Thereby the food material may enter the gaps so that the surfaces of the food material may be disfigured. Further, there are also problems in that since only the tip portions of the polyhedral members touch the side surfaces of adjacent members, the tip portions wear away so that the central opening cannot be completely closed. Thereby the effects of cutting and shaping a spherical body are reduced.

EP-A-0478135 discloses a shutter assembly for use in cutting and shaping a spherical body from a bar-shaped dough comprising at least three shutter members, each of which has first and second adjacent sliding surfaces and an elongate hole provided in a central part of the member, wherein each member is pivotally and slidingly mounted on a shaft by means of the hole, the shafts being equidistantly disposed on an imaginary circle such that the first sliding surface of a member tracks the second sliding surface of an adjacent member to form a central opening surrounded by a series of the sliding surfaces being tracked by the other sliding surfaces to cut and shape the bar-shaped dough passing through the central opening.

The present invention is characterised over EP-A-0478135 in that the shutter assembly further comprises a combining member, bridging the first sliding surface of a shutter member and the second sliding surface of the adjacent shutter member so as to prevent the shutter members from being separated from one another in use, and wherein the shutter members are slidingly held without any clogging or seizing up of the shutter members, so that the shutter assembly can be continuously operated to produce food products free from disfigured surfaces.

By means of this construction, the device of this invention need have no housing to hold the assembly of polyhedral pieces, the pieces will not cause clogging even when they expand by heat during the operation. Also, since in this invention the side surfaces of adjacent polyhedral pieces always slidingly abut each other, no gap is formed therebetween for food material to enter.

The combining member of this invention may be any type that makes adjacent shutter members slightly contact each other with substantially no space therebetween. For instance, the combining member may be key-shaped, and the body portion may be fixed to one shutter member while the key-shaped portion may slidingly engage a groove in the other shutter member.

In a preferred embodiment, the elongate hole in the shutter member is preferably provided parallel to the first sliding surface. A rotating shaft is fit in each long hole at a point equidistantly disposed on an imaginary circle, the total number of such shafts being equal to the number of shutter members. Because of this arrangement, the distance from the shaft to the tip of each shutter member varies so as to prevent the shutter members from being locked with each other.

There is no need for every shaft to be a drive shaft. Only one shaft needs to be a drive shaft, while the remaining shafts may be driven shafts or fulcrums that do not rotate.
Certain embodiments of the invention will now be described, by way of example only, and with reference to the accompanying drawings:-
Fig. 1 is a schematic front view, partly in section, of the entire apparatus for cutting and shaping the bar-shaped food material of this invention.
Fig. 2 is a schematic plan, partly in section, showing the drive mechanism for driving the shutter members.
Fig. 4 is a plan showing the function of a shutter assembly of the first embodiment.
Fig. 5 is a plan showing the function of the shutter assembly.
Fig. 6 is a plan showing the function of the shutter assembly.
Fig. 7 is also a plan showing the function of the shutter assembly.
Fig. 8 is a perspective showing a shutter member in detail.
Fig. 9 is a plan showing the function of the shutter assembly of the second embodiment.
Fig. 10 is also a plan showing the function of the shutter assembly.
Fig. 11 is also a plan showing the function of the shutter assembly.
Fig. 12 is also a plan showing the function of the shutter assembly.
Fig. 13 is a perspective showing in detail another type of shutter member.

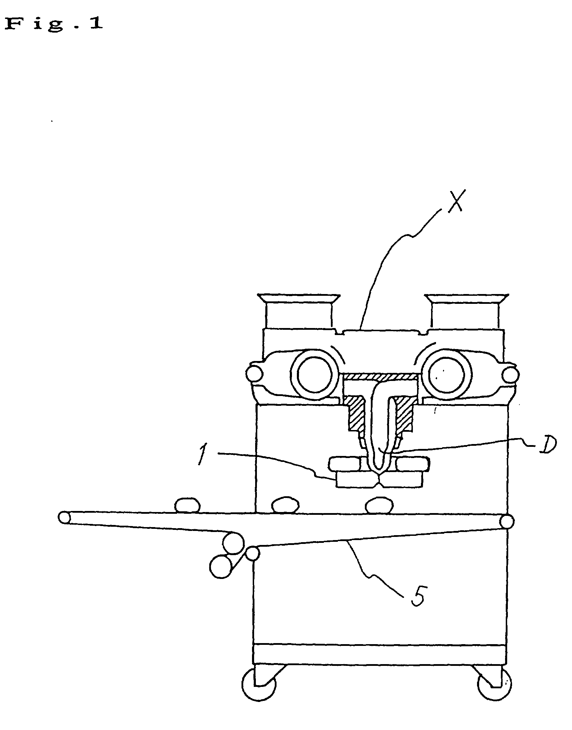

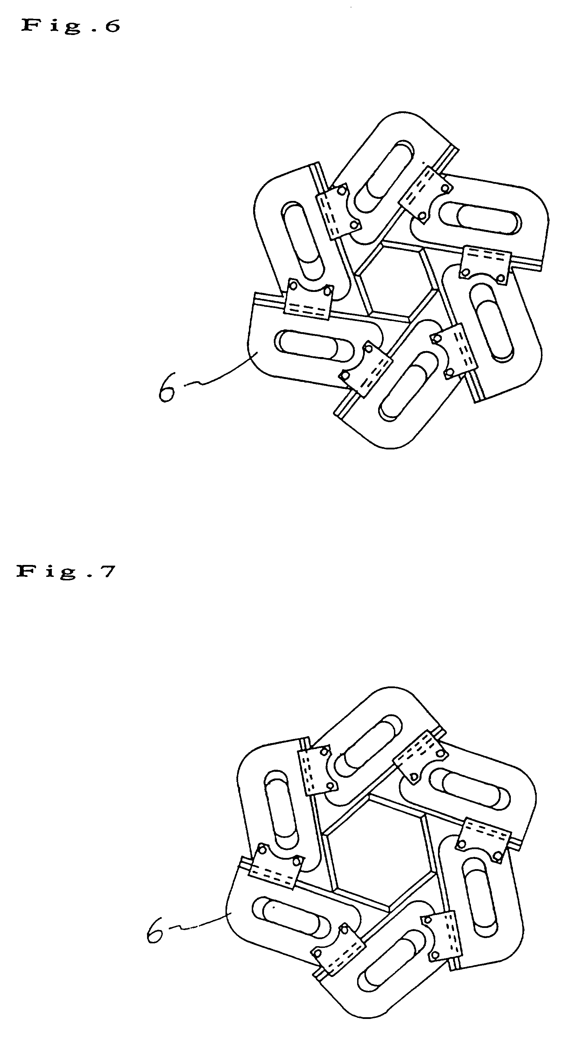

The reference mark X in Fig. 1 designates an extruder assembly that continuously extrudes food material. In this embodiment two extruders are provided, one for fillings and one for crusts, such that a continuous bar-shaped food material D is formed and extruded into a central opening 2 (Fig. 5) formed by a shutter mechanism 1 disposed under the extruder X.

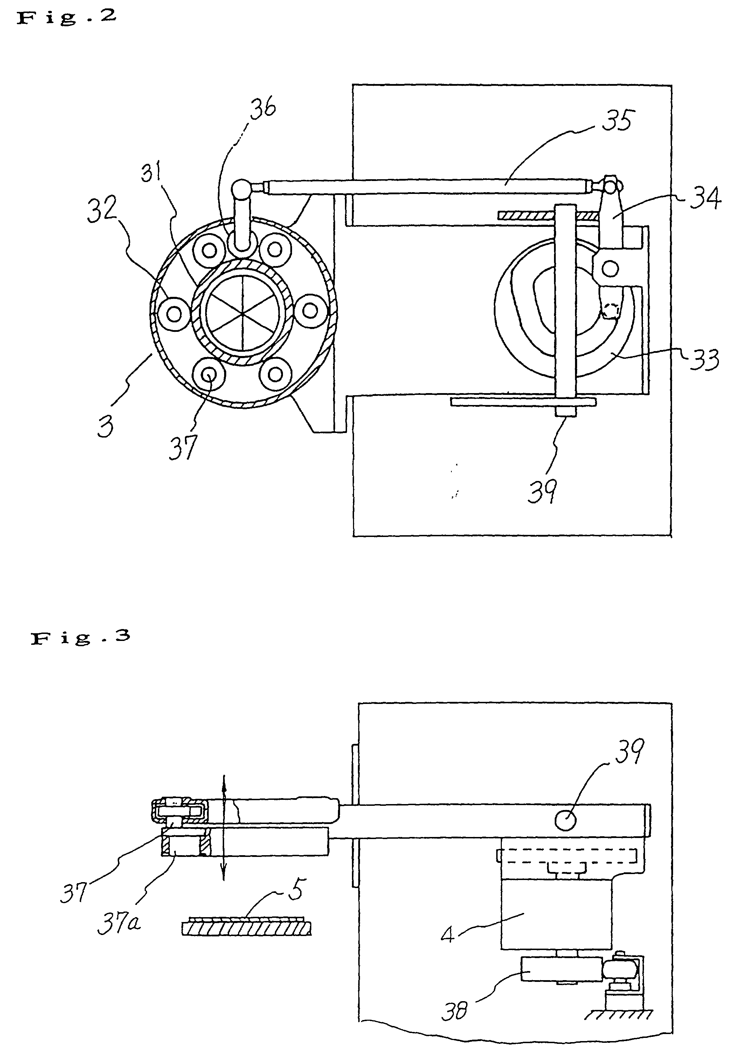

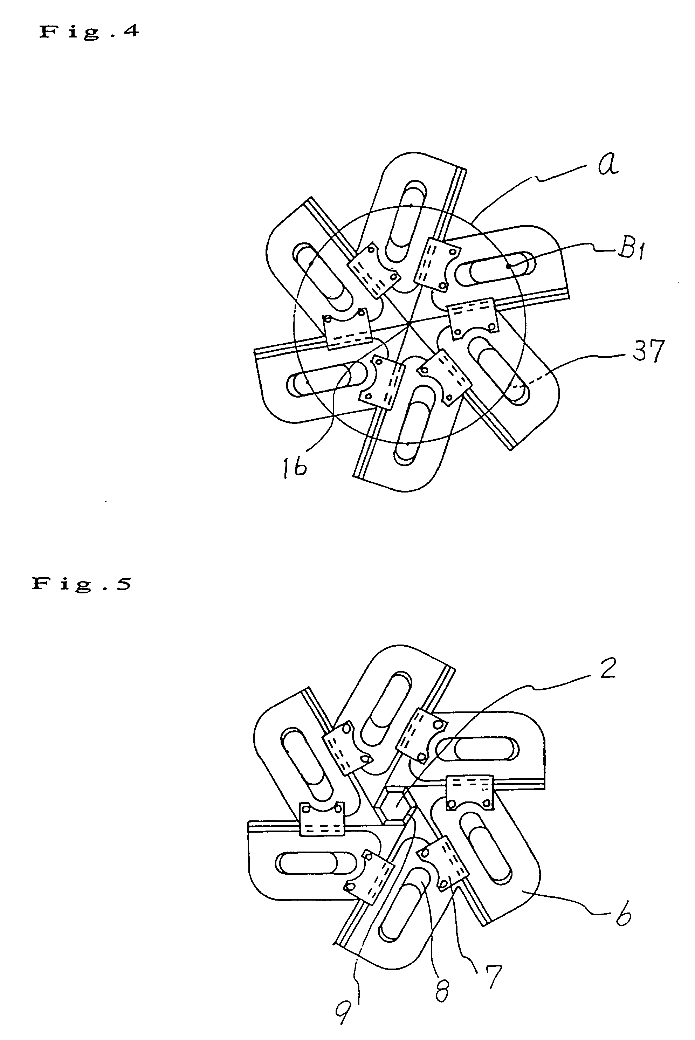

In a shutter assembly drive mechanism 3, shown in Figs. 2 and 3, the rotary drive of a motor 4 is transmitted to a ring gear 31 and gears 32 via a rotary cam 33 with a round groove followed by a cam follower connected to an arm 34. The cam follower is pivoted on a frame so that the movement of the cam follower is transmitted to the arm 34, which pulls or pushes a rod 35. The rod is connected to a gear 36, to rotate shafts 37, each of which is connected to respective gears 32, which synchronously rotate shutter members 6,10 fit in the shafts 37 to cut and shape bar-shaped food material D.

A cam 38, connected to the motor 4, is for making the entire drive mechanism 3 move up and down so that the drive mechanism 3 moves up and down through a supporting shaft 39. The cam 38 has a cam groove in a spiral form about it and a cam follower that can raise or lower the cam 38 when it rotates.

A conveyor 5, disposed under the drive mechanism 3, is for receiving the cut and shaped products and conveying them for the next process. The conveyor 5 may be moved up and down in synchronism with the movement of the drive mechanism 3.

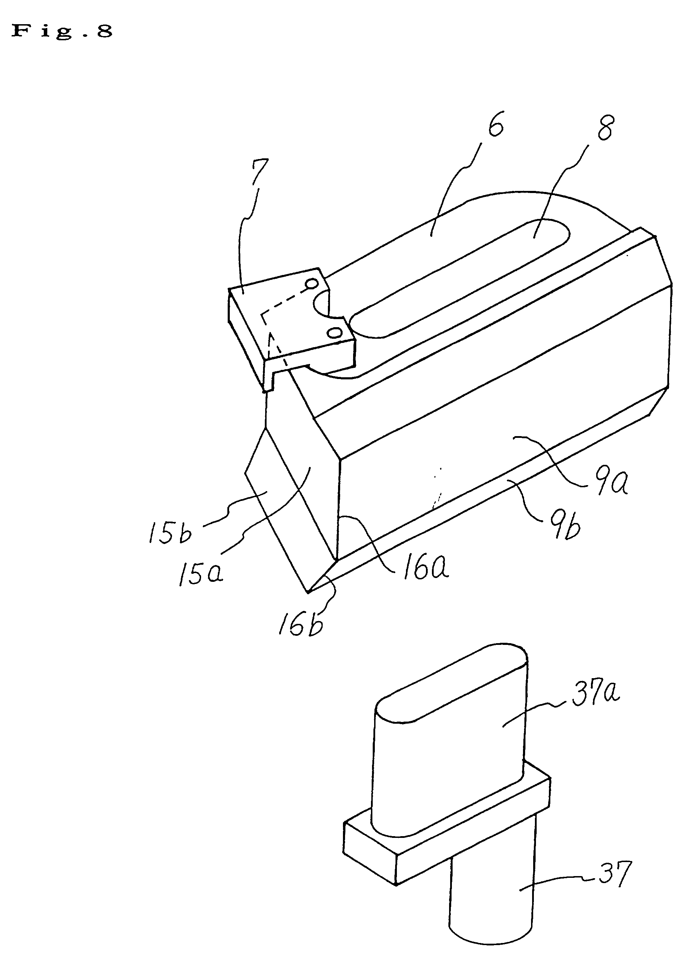

In a first embodiment, shown in Figs. 4 - 7, the assembly of shutter members is constituted by combining six shutter members 6 of an identical shape such that every adjacent shutter member is bridged by combining members 7 so as to make the side surfaces of adjacent shutter members slidingly contact each other. A long hole 8 is provided in each shutter member 6 such that its longitudinal axis is parallel to the sliding surface 9 forming the central opening 2. Rotary shafts 37 are pivoted on six fulcrums B1 equidistantly disposed on an imaginary circle a so that each shaft engages the long hole 8. As shown in Fig. 8, each shaft 37 may have an operative shaft 37a fixedly mounted thereon so that the shaft 37a can fit in the long hole 8 and slide in the longitudinal direction of the hole 8.

Adjacent shutter members are bridged by combining members 7 so as to prevent the shutter members 6 from being separated when they are rotated by the rotation of the shafts 37. Since the distance from the fulcrum B1 to the tip 16 can vary, the shafts 37,37a can smoothly slide along the inside of the long hole 8 to open and close the central opening 2. If no long hole 8 were provided in the shutter member 6, and if the shutter member were rotated by a shaft merely pivoted thereon, the shutter member would not rotate smoothly since the rotation of the shutter members is locked by its engagement with the shaft. The provision of the long hole enables the shaft to slidingly rotate to open and close the central opening 2.

Fig. 4 shows the shutter members 6 when the central opening 2 formed by them is closed. Figs. 5 - 7 show the positions taken by the shutter members 6 at some points when the central opening 2 is being opened.

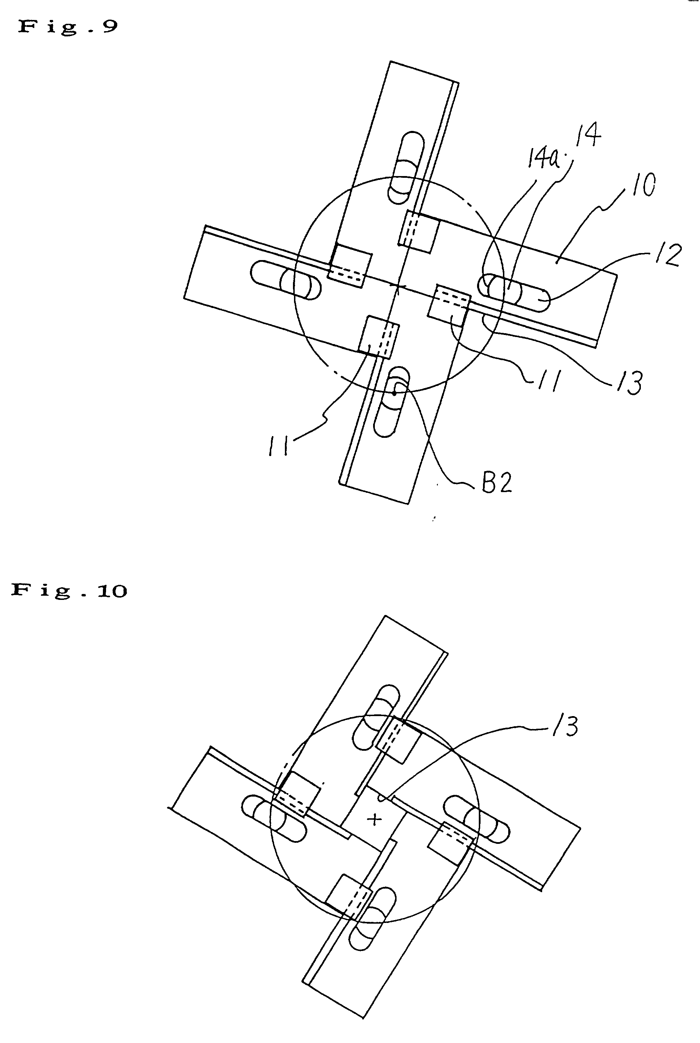

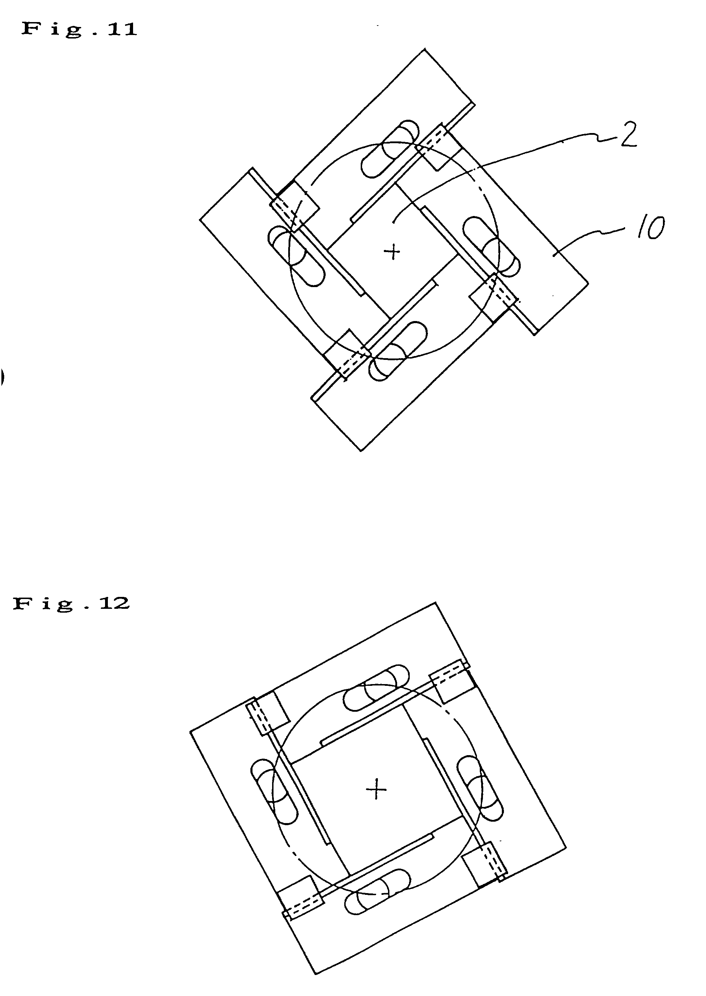

A second embodiment of the shutter assembly of this invention will now be described by reference to Figs. 9 - 12. Four shutter members 10, of an identical shape, are combined by bridging adjacent shutter members 10 with combining members 11 so that the sliding surfaces of every shutter member slidingly contact each other.

A long hole 12 is provided in each shutter member 10. This long hole 12 is provided such that its longitudinal axis is parallel to the sliding surface 13 of the shutter member that participates in forming the central opening 2.

Shafts 14 are provided at fulcrums B2 provided at four equidistant points on an imaginary circle a. An operative shaft 14a is additionally provided to each shaft 14 so that the operative shaft 14a is fit in the long hole 12, and slidingly contacts the inside surface thereof.

When the shutter members 10 are rotated by the rotation of the shafts 14, since adjacent shutter members are bridged with combining members 11, the shutter members 10 are prevented from being separated. Since the distance from the fulcrum B2 to the tip 16 of the shutter member can vary, the shafts 14,14a can smoothly slide along the inside surface of the long hole 8 to open and close the central opening 2.

If no long hole 12 were provided in the shutter member 10, and if the shutter member were rotated by a shaft pivotally connected thereto without any long hole, the shutter member could not rotate, since the shaft would interfere with the shutter member. The provision of the long hole enables the shaft to slidingly rotate to open and close the central opening 2.

Fig. 9 shows the shutter members 10 when the central opening 2 they form is closed. Figs. 10 - 12 show positions taken of the shutter members 10 at some points when the central opening 2 is being opened.

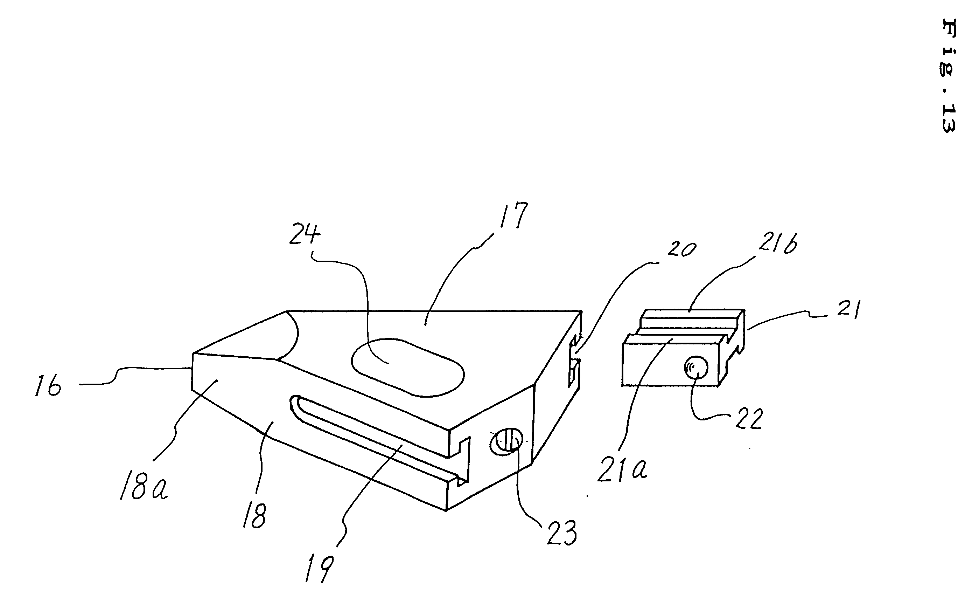

Fig. 13 shows a third embodiment of the shutter assembly and combining member of this invention.

The shutter member 17 of the third embodiment has a portion of a sliding surface 18a designed for pressing the outer surface of bar-shaped food material. The thickness of the pressing portion 18a gradually decreases toward the tip.

A groove 19 is provided in a side sliding surface 18 of the shutter 17 at a portion of the side sliding surface 18 other than the pressing portion 18a. Another groove 20 is correspondingly provided in the other side sliding surface. An engaging part 21a of a combining member 21 is engaged with the other groove 20, and fixed to a rear part of the shutter member 17 with a screw 23 to be fit in a hole 22 provided in the engaging part 21a. Another engaging part 21b of the combining member 21 is engaged with the groove 19 of an adjacent shutter member 17.

The shutter members 17 are thus assembled into a shutter assembly. The shutter members are then fit on shafts (not shown) through their respective long holes 24 to be rotated to cut and shape bar-shaped food material.

This embodiment of Fig. 13 differs from the embodiment shown in Fig. 8 in that in the former one no combining member is exposed when shutter members are assembled, so that a compact assembly is possible.

In the above embodiments, shafts are pivoted on fulcrums B equidistantly disposed on an imaginary circle to drive respective shutters. However, there is no need for the embodiments to be so limited. At least one shaft pivoted on a fulcrum may be enough to drive all the shutter members. In this case the operative shafts 37a mounted on the other shafts 37 merely serve as a driven shaft. Also, when shafts are used as driven shafts, no shaft is needed that has a sliding surface of a particular shape such as for the operative shaft 37a. Thus the shaft 37 need not rotate, but may be fit in the long hole of a shutter member so that it merely serves as a fulcrum.

The shutter member 6 of Fig. 8 has convex sliding surfaces (9a and 9b), concave sliding surfaces (15a and 15b), and ridges (16a and 16b) where the the convex and concave surfaces meet, so that a convex-concave engagement results between adjacent shutter members.

We will now explain the functions and effects of the two-step cutting and shaping operation of the shutter members 6 by reference to Figs. 1, 4, and 8.

At first mainly the sliding surface 9a presses bar-shaped food material D as the central opening 2 decreases, so that the periphery of the food material D is deformed so as to make a neck-like part. At this time the neck-like part, which has been formed by pressure exerted from all directions, has a reduced surface area so that no filling can be exposed. This function continues until the food material is cut by the ridges 16a that gather at the center of the assembly.

As the shutter members continue to rotate, the ridges 16b further progress while contacting and crossing each other, until the rotating operation stops when the ridges 16b disappear (as shown in Fig. 4).

During this two-step cutting and shaping operation the shutter assembly can completely separate even very sticky dough material, and guide the crust of the cut product to its top portion.

In another embodiment of the drive mechanism 3, the motor 4 may be one having a control function such as a servo motor. The amount of the crust to be guided by the shutter assembly during the cutting and shaping operation of bar-shaped food material can be adjusted by controlling the rotational speed, rotational angle, and rotational direction, of the motor, so that the thickness of the crust at various points can be adjusted and products of various shapes can be cut and shaped.

As described above, this invention has the following effects:

Since this invention has no housing to hold an assembly of polyhedral members, the assembly will not be clogged even when the shutter members are expanded by heat generated during the operation.

Also, since in this invention the side surfaces of adjacent polyhedral members always slidingly abut each other so as to at least substantially eliminate any gap formed therebetween, no food material will enter any gap formed in a conventional shutter assembly between the side surfaces of the polyhedral members. Thus, food products free from disfigured surfaces can be produced.

Since the shutter assembly of this invention is not clogged by heat during the operation, as is inevitable in the conventional apparatus, it can be continuously operated for a long time.

## Claims

1. A shutter assembly for use in cutting and shaping a spherical body from bar-shaped dough, comprising at least three shutter members (6;10;17), each of which has first and second adjacent sliding surfaces (9,15;13;18) and an elongate hole (8;12;24) provided in a central part of the shutter member, wherein each shutter member is pivotally and slidingly mounted on a shaft (37;14) by means of the hole, the shafts being equidistantly disposed on an imaginary circle (a) such that in use the first sliding surface of a shutter member tracks the second sliding surface of an adjacent shutter member to form a central opening surrounded by a series of the first sliding surfaces being tracked by the second sliding surfaces to cut and shape the bar-shaped dough passing through the central opening (2), **characterised by** a combining member (7;11; 21) bridging the first sliding surface of a shutter member and the second sliding surface of the adjacent shutter member so as to prevent the shutter members from being separated from one another in use, and wherein the shutter members are slidingly held in the shutter assembly without any clogging or seizing up of the shutter members.

2. A shutter assembly as claimed in claim 1, wherein the first sliding surface of each shutter member (6;10;17) is convex (9a,9b) and the second sliding surface (15a, 15b) is concave so that a convex-concave engagement results between adjacent shutter members.

3. A shutter as claimed in claim 1 or 2, wherein the combining member (7;11;21) is key-shaped, the body portion of which is fixed to one shutter member (6;10; 17), while the key-shaped portion slidingly engages a groove (19) provided in the adjacent shutter member.

4. A shutter assembly as claimed in claim 1, 2 or 3, wherein the elongate hole (8;12;24) is provided such that its longitudinal axis is parallel to the first sliding surface (9;13;18) of the shutter member that participates in forming the central opening (2).

5. A shutter assembly as claimed in any preceding claim, wherein each shaft (37;14) has an operative shaft (37a;14a) fixedly mounted thereon so that the shaft can fit in the elongate hole (8;12;24) and slide in the longitudinal direction of the elongate hole.

6. An apparatus for cutting and shaping a spherical body from bar-shaped dough, the apparatus comprising a shutter assembly as claimed in any preceding claim, and further comprising an extruder (X) for extruding the bar-shaped dough, a drive mechanism (3) for driving the shutter assembly, the drive mechanism comprising a gear (32) connected to each shaft (37;14) for rotating the shaft, a ring gear (31) engaged with each of the gears (32) for transmitting the rotary drive of a motor (4) via a rotary cam (33), an arm (34), a rod (35), and a gear (36) for driving the ring gear, and a cam (38) connected to the motor for making the drive mechanism move up and down.

7. An apparatus as claimed in claim 6, wherein at least one of the shafts (37;14) is a drive shaft for rotating the shutter members.

## Patentansprüche

1. Einrichtung zum Schneiden und Formen eines sphärischen Körpers aus stangenförmigem Teig, mit zumindest drei Schneid- und Formelementen (6; 10; 17), deren jedes erste und zweite benachbarte Gleitflächen (9; 15; 13; 18) und ein langgestrecktes Loch (8; 12; 24) aufweisen, das in einem Mittelteil des Schneid- und Formelements angeordnet ist, wobei jedes Schneid- und Formelement mittels des Loches drehbar und gleitbar auf einer Welle (37; 14) gelagert ist und die Wellen in gleichem Abstand voneinander auf einem imaginären Kreis (a) derart angeordnet sind, daß im Gebrauch die erste Gleitfläche eines Schneid- und Formelements die zweite Gleitfläche eines benachbarten Schneid- und Formelements führt, um eine zentrale Öffnung zu bilden, die von einer Reihe von ersten Gleitflächen umgeben ist, die von den zweiten Gleitflächen geführt sind, um den durch die Mittelöffnung (2) hindurchtretenden stangenförmigen Teig zu schneiden und zu formen, **gekennzeichnet durch** ein verbindendes Element (7; 11; 21), welches die erste Gleitfläche eines Schneid- und Formelements und die zweite Gleitfläche eines benachbarten Schneidund Formelements überbrückt, um zu verhindern, daß die Schneidund Formelemente während des Betriebs voneinander getrennt werden, und in dem die Schneid- und Formelemente in der Vorrichtung gleitend gehalten sind, ohne daß ein Festsetzen oder Fressen der Schneid- und Formelemente auftritt.

2. Einrichtung nach Anspruch 1, bei welcher die erste Gleitfläche jedes Schneid- und Formelements (6; 10; 17) konvex (9a,9b) und die zweite Gleitfläche (15a, 15b) konkav ist, so daß ein konvex-konkaver Eingriff zwischen benachbarten Schneid- und Formelementen entsteht.

3. Einrichtung nach Anspruch 1 oder 2, bei welchem das verbindende Element (7; 11; 21) keilförmig ist und sein Körper an einem Schneid- und Formelement (6; 10; 17) fixiert ist, während der keilförmige Abschnitt gleitend in eine am benachbarten Schneid- und Formelement vorgesehene Nut (19) eingreift.

4. Einrichtung nach Anspruch 1, 2 oder 3, bei welcher die langgestreckte Öffnung (8; 12; 24) derart vorgesehen ist, daß ihre Längsachse parallel zur ersten Gleitfläche (9; 13; 18) des Verschlußelements verläuft, die an der Bildung der Mittelöffnung (2) teilnimmt.

5. Einrichtung nach einem der vorhergehenden Ansprüche, bei welcher jede Welle (37; 14) eine operative Welle (37a; 14a) aufweist, die an ihr fest montiert ist, derart, daß die Welle in die langgestreckte Öffnung (8; 12; 20) paßt und in Längsrichtung der langgestreckten Öffnung gleitet.

6. Vorrichtung zum Schneiden und Formen eines sphärischen Körpers aus stangenförmigem Teig, mit einer Einrichtung zum Schneiden und Formen nach irgendeinem der vorherigen Ansprüche und ferner mit einem Extruder (X) zum Extrudieren des stangenförmigen Teigs, einem Antriebsmechanismus (3) für den Antrieb der Schneid- und Formeinrichtung, wobei der Antriebsmechanismus ein mit jeder Welle (37; 14) verbundenes Zahnrad (32) zwecks Rotierens der Welle aufweist,
mit einem mit jedem der Zahnräder (32) in Eingriff befindlichen Ringzahnrad (31) zwecks Übertragung des Drehantriebs eines Motors (4) über eine drehbare Nocke (33), einem Arm (34), einem Stab (35) und einem Zahnrad (36) für den Antrieb des Ringzahnrades, sowie mit einem mit dem Motor verbundenen Nocken (38) zur Auf- und Niederbewegung des Antriebsmechanismus.

7. Vorrichtung nach Anspruch 6, bei welcher zumindest eine der Wellen (37; 14) eine Antriebswelle zur Rotation der Schneid- und Formelemente ist.

## Revendications

1. Agencement d'obturateur destiné à être utilisé pour couper et façonner un corps sphérique à partir d'une pâte en forme de barre, comprenant au moins trois éléments d'obturateur (6 ; 10 ; 17), chacun comportant des première et deuxième surfaces de glissement adjacentes (9, 15 ; 13 ; 18) et un trou allongé (8 ; 12 ; 24) formé dans une partie centrale de l'élément d'obturateur, dans lequel chaque élément d'obturateur est monté de manière à pivoter et glisser sur un arbre (37 ; 14) au moyen du trou, les arbres étant équidistants sur un cercle imaginaire (a) de manière que, à l'utilisation, la première surface de glissement d'un élément d'obturateur suive la deuxième surface de glissement d'un élément d'obturateur adjacent pour former une ouverture centrale entourée par une série des premières surfaces de glissement étant suivies par les deuxièmes surfaces de glissement pour couper et façonner la pâte en forme de barre passant par l'ouverture centrale (2), **caractérisé en ce qu'**un élément de connexion (7 ; 11 ; 21) jette un pont entre la première surface de glissement d'un élément d'obturateur et la deuxième surface de glissement de l'élément d'obturateur adjacent de manière à empêcher que les éléments d'obturateur se séparent les uns des autres à l'utilisation, et dans lequel les éléments d'obturateur sont maintenus en glissement dans l'agencement d'obturateur sans aucun engorgement ou grippage des éléments d'obturateur.

2. Agencement d'obturateur selon la revendication 1, dans lequel la première surface de glissement de chaque élément d'obturateur (6 ; 10 ; 17) est convexe (9a, 9b) et la deuxième surface de glissement (15a, 15b) est concave de manière qu'une engagement convexe-concave résulte entre des éléments d'obturateur adjacents.

3. Agencement d'obturateur selon la revendication 1 ou 2, dans lequel l'élément de connexion (7 ; 11 ; 21) a la forme d'une clé, dont la partie de corps est fixée à un élément d'obturateur (6 ; 10 ; 17), tandis que la partie en forme de clé engage en glissement une rainure (19) ménagée dans l'élément d'obturateur adjacent.

4. Agencement d'obturateur selon la revendication 1, 2 ou 3, dans lequel le trou allongé (8 ; 12 ; 24) est formé de manière que son axe longitudinal soit parallèle à la première surface de glissement (9 ; 13 ; 18) de l'élément d'obturateur qui participe à la formation de l'ouverture centrale (2).

5. Agencement d'obturateur selon l'une quelconque des revendications précédentes, dans lequel chaque arbre (37 ; 14) comporte un arbre opérant (37a ; 14a) monté fixement sur lui de manière que l'arbre puisse s'emboîter dans le trou allongé (8 ; 12 ; 24) et glisser dans la direction longitudinale du trou allongé.

6. Appareil pour couper et façonner un corps sphérique à partir d'une pâte en forme de barre, l'appareil comprenant un agencement d'obturateur selon l'une quelconque des revendications précédentes, et comprenant également une extrudeuse (X) pour extruder la pâte en forme de barre, un mécanisme d'entraînement (3) pour entraîner l'agencement d'obturateur, le mécanisme d'entraînement comprenant un engrenage (32) relié à chaque arbre (37 ; 14) pour faire tourner l'arbre, une couronne (31) engagée avec chacun des engrenages (32) pour transmettre l'entraînement en rotation d'un moteur (4) via une came rotative (33), un bras (34), une tige (35), et un engrenage (36) pour entraîner la couronne, et une came (38) reliée au moteur pour déplacer le mécanisme d'entraînement vers le haut et vers le bas.

7. Appareil selon la revendication 6, dans lequel au moins un des arbres (37 ; 14) est un arbre d'entraînement pour faire tourner les éléments d'obturateur.
